# EUROPEAN PATENT SPECIFICATION

(11) **EP 3 203 149 B1**
(45) Date of publication and mention of the grant of the patent: **05.09.2018**
(21) Application number: 16305119.6
(22) Date of filing: 03.02.2016
(51) Int. Cl.: F22B 1/18, F01K 23/10

(54) **COMBINED-CYCLE CO-GENERATION PROCESS AND INSTALLATION**
KOMBIKRAFTWERKSVERFAHREN UND ANLAGE
PROCESSUS ET INSTALLATION DE COGÉNÉRATION À CYCLE COMBINÉ

(43) Date of publication of application: 09.08.2017
(73) Proprietor: L'AIR LIQUIDE, SOCIETE ANONYME POUR L'ETUDE ET L'EXPLOITATION DES PROCEDES GEORGES CLAUDE, 75007 Paris (FR)
(72) Inventor: POLINE, Tanguy, 94370 SUCY-EN-BRIE (FR)
(74) Representative: De Vleeschauwer, Natalie Y.L.D.

(56) References cited:
- US-A1- 2008 178 604
- US-A1- 2010 058 764
- US-B1- 6 247 315
- US-B1- 6 572 674

## Description

The present invention relates to a combined-cycle co-generation process and to a combined-cycle co-generation installation.

Co-generation processes and installations whereby the combustion of fuel is used to generate both power (in particular electricity) and heat (in particular in the form of steam) are known in the art.

Combined-cycle co-generation processes and installations whereby a gas turbine or, for small power requirements: an internal combustion engine, is used to generate electricity and whereby the hot exhaust gas from the gas turbine or internal combustion engine is used to generate steam are likewise known in the art.

The steam generator in which said hot exhaust gases are used to turn process water into steam is generally referred to as "Heat Recovery Steam Generator", in short "HRSG".

The steam generated in the combined-cycle co-generation process can be used as such, for example to meet steam requirements in industrial installations, or it may be used to generate further electricity, in particular by means of a steam turbine.

In what follows, the term "combustion unit" is used to refer collectively to such gas turbines and/or internal combustion engines connected to a HRSG so that their exhaust gas can be fed to the HRSG as a heat source, whereby said combustion unit is further adapted to generate electricity.

The HRSG may operate as a heat exchanger only, in which case only heat from the hot exhaust gas is transferred to the process water/steam. The HRSG may also operate as a boiler in which heat is generated by burning additional fuel. The firing of additional fuel in a HRSG is generally referred to as "supplementary firing".

The present invention relates to such a combined-cycle co-generation process and to a combined-cycle co-generation installation with supplementary firing in the HRSG.

In US-B-6247315, it is proposed to improve the combustion/heat transfer in such an HRSG by using an additional heat exchanger to heat combustion air for supplementary firing through heat exchange with a first portion of the hot exhaust gases from the combustion engine. As a result, the efficiency of the overall co-generation process is improved. The remainder of the hot exhaust gases from the combustion engine is fed to the HRSG as described above.

Whereas this known technology makes it possible to improve the efficiency of the supplementary firing in the HRSG, it is an inconvenience of this process that the portion of the hot exhaust gases used to preheat combustion air in the additional heat exchanger is no longer fed to the HRSG and is therefore no longer available as a direct heat source for said HRSG.

In US-A-3703807, it is proposed to use part of the boiler flue gases to preheat the turbine inlet air so as to improve the combustion efficiency of the gas turbine.

As indicated above, combined-cycle co-generation processes and installations generate both electricity by means of the combustion unit and steam, by means of the HSRG.

In particular when said steam is generated so as to be supplied to one or more industrial installations, as opposed to said steam being sent directly to a steam turbine so as to generate additional electricity, it is important at all times to meet the steam requirements of said industrial installations as regards steam volume, temperature and pressure.

In particular when the electricity generated by the gas turbine is supplied to the grid and/or when the grid is available as an alternative source of electricity, electricity generation may be optional. Indeed, in that case, electricity production may temporarily be profitable, neutral or loss-making for the operation of the co-generation process or installation depending on the sale or purchase price of the electricity to or from the grid.

The sale or purchase price of electricity not only evolves with the prices on the world energy market but also depends on variations over time in the more local electricity demand, for example according to the time of day (e.g. day/night), the days of the week (e.g. weekday/weekend/public holiday) and/or the time of year (e.g. summer/winter).

When electricity generation by means of the combustion unit is not profitable or is loss-making, the operator may decide to shut down the combustion unit. However, this leads to an interruption of the supply of hot exhaust gas from the combustion unit to the HRSG.

A similar situation arises when a gas turbine or internal combustion engine from the combustion unit upstream of the HRSG needs to be taken out of service for maintenance or repair.

When the HRSG is equipped with one or more supplementary fire burners, steam production can be maintained regardless, at least up to a given level.

However, in the absence of hot exhaust gas from the combustion unit, the efficiency of known HRSGs is generally lower than that of non HRSG-boilers, i.e. boilers that are not designed to receive hot exhaust gas from an extraneous source and which rely entirely on fuel combustion within the boiler as a source of thermal energy for steam production.

For this reason, it is known to install back-up boilers in parallel to the HRSG. When the combustion unit is turned off or disconnected from the HRSG, efficient steam generation can then be ensured by the more efficient back-up boiler instead of by the HRSG (when used as a boiler). However, such a back-up boiler comes at a substantial additional construction and maintenance cost and is space-consuming and switching between the HRSG and the back-up boiler and vice-versa is generally time-consuming.

In accordance with the present invention, there is provided a combined-cycle co-generation process and installation, which allows significantly more efficient steam generation by means of the HRSG in particular when a gas turbine or internal combustion engine upstream of the HRSG is turned off or disconnected so that no hot exhaust gas therefrom is supplied to the HRSG.

The present invention more particularly aims to provide a more efficient operation of the HRSG when no hot exhaust gas from the gas turbine/internal combustion engine is supplied to the HRSG and this without need for a costly and bulky back-up boiler.

Thereto, the present invention proposes a new combined-cycle co-generation installation.

The installation of the present invention includes a combustion unit, as defined above, which is adapted to generate electrical power. The combustion unit has an exhaust gas outlet for the hot exhaust gas generated by combustion inside the combustion unit.

The installation of the present invention further includes a HRSG having an exhaust gas inlet and a flue gas outlet. The exhaust gas inlet is connected to the exhaust gas outlet of the combustion unit so as to enable hot exhaust gas from the combustion unit to be supplied to the HRSG via its exhaust gas inlet.

The HRSG also presents a process water inlet, a steam outlet and a water/steam flow path. This flow path connects the process water inlet to the steam outlet and includes an evaporator. The term water/steam flow path refers to the succession of conducts and the devices, such as the evaporator, through which the process water and, after its evaporation, the generated steam flows from the water inlet to the steam outlet.

The HRSG further presents a fuel inlet, at least one supplementary fire burner connected to said fuel inlet as well as a combustion oxidant inlet. The location of the combustion oxidant inlet in the HRSG is such that, when combustion oxidant is introduced into the HRSG via said combustion oxidant inlet, the at least one supplementary fire burner may combust fuel from the fuel inlet at least in part with said combustion oxidant. It will be appreciated that the combustion oxidant inlet may comprise a number of suitably positioned combustion-oxidant inlet openings and/or combustion-oxidant injectors. Such a combustion oxidant inlet may or may not be integrated in a supplementary fire burner. The combustion oxidant inlet may also be partially or totally merged with the hot exhaust gas inlet of the HRSG.

In accordance with the present invention, the installation includes an oxidant preheater connected to and upstream of the combustion oxidant inlet of the HRSG (with respect to the flow direction of the combustion oxidant). The oxidant preheater is adapted for heating combustion oxidant upstream of the combustion oxidant inlet by heat exchange with the process water upstream of the evaporator (with respect to the flow direction of the process water/steam). The oxidant preheater is thus typically a water/oxidant heat exchanger presenting an oxidant circuit and a water circuit separated from one another by one or more heat exchange surfaces.

According to one embodiment, the oxidant preheater is situated upstream of the process water inlet of the HRSG (with respect to the flow direction of the process water/steam). This embodiment is of interest when the process water is supplied to the HRSG at a temperature substantially above the ambient temperature. For example, when the steam generated by the HRSG is supplied as process steam to nearby industrial plants and the condensate is returned to the HRSG as process water, the temperature of said condensate is normally significantly above ambient or room temperature.

When the water/steam flow path comprises an economiser upstream of the evaporator, the oxidant preheater can advantageously be situated between the economiser and the evaporator along the water/steam flow path. For example, the water steam flow path may comprise a water circulation loop having its water inlet downstream of the economizer and its water outlet upstream of the economizer (along the water/steam flow path), whereby the oxidant preheater is located on this water circulation loop. By means of such a water circulation loop, process water heated in the economizer can be sent to the oxidant preheater for heating combustion oxidant by heat exchange therewith, after which the process water cooled in the oxidant preheater is sent back to the economizer through the remainder of the water circulation loop.

According to a further embodiment, the water/steam flow path includes a water preheater upstream of the evaporator. In that case, the oxidant preheater can usefully be situated between the water preheater and the evaporator.

When the water/steam flow path includes a water preheater, and an economiser, the economiser being located between the water preheater and the evaporator inside the HRSG, the oxidant preheater may also be located between the water preheater and the economiser along the water/steam flow path (or before the preheater).

The installation according to the present invention advantageously includes a flue gas recycle to recycle back into the HRSG part of the HRSG flue gas, which flue gas has previously been evacuated from the HRSG via its flue gas outlet.

In that case, the flue gas recycle is preferably adapted to admix at least part of, and optionally all of, the recycled HRSG flue gas with the combustion oxidant upstream of the combustion oxidant inlet. In this manner, the residual heat present in the recycled HRSG flue gas can be incorporated into the combustion oxidant when combustion oxidant is introduced into the HRSG for supplementary firing.

The flue gas recycle may more specifically usefully be adapted to admix the the recycled HRSG flue gas with the combustion oxdiant downstream of the oxidant preheater, i.e. with the oxidant which has already been heated in the oxidant preheater. In this manner, the heat exchange efficiency of the oxidant preheater remains high.

Other configurations of the flue gas recycle are also possible.

The installation typically comprises an oxidant compressor or an oxidant fan upstream of the combustion oxidant inlet of the HRGS for pressuring or drawing in the combustion oxidant to ensure a required flow of combustion oxidant to the combustion oxidant inlet.

Although the combustion unit may comprise more than one gas turbine or internal combustion engine, in general, the combustion unit consists of only one gas turbine or internal combustion engine (the latter typically when the HRSG is a relatively low-capacity HRSG). The combustion unit preferably consists of a single gas turbine.

The combustion unit and the combustion oxidant inlet of the HRSG may be connected to a same oxidant source or to different oxidant sources.

Likewise, the combustion unit and the fuel inlet of the HRSG may be connected to a same fuel source or to different fuel sources.

The present invention also relates to the use of a combined-cycle co-generation installation according to any one of the embodiments above to generate steam by means of the HRSG and optionally also electricity by means of the combustion unit.

The combined-cycle co-generation installation is used to generate electrical power and steam when both the combustion unit, which generates electrical power, and the HRSG which generates steam, are operating.

The combined-cycle co-generation installation is used to generate steam only when the HRSG is operating and the combustion unit is inactive. In the latter case, the HRSG operates as a boiler with supplementary firing of fuel with combustion oxidant by means of the supplementary fire burner.

Although reference is made to a single supplementary fire burner, it will be clear that the HRSG may comprise multiple supplementary fire burners.

Thanks to the oxidant preheater of the installation according to the present invention, the HRSG can generate steam with high energy efficiency both when the combined-cycle co-generation installation is used:
A) in a first operation mode whereby hot exhaust gas from the combustion unit is introduced into the HRSG via its exhaust gas inlet, said hot exhaust gas serving as a source of thermal energy for generating steam from process water in the HRSG,
and when the combined-cycle co-generation installation is used:
B) in a second operation mode whereby no exhaust gas from the combustion unit is introduced into the HRSG and combustion by means of the supplementary fire burner of fuel introduced via the fuel inlet with combustion oxidant introduced via the combustion oxidant inlet takes place in the HRSG to generate thermal energy for generating steam from process water in the HRSG.

In the second operation mode, the supplementary fire burner combusts the fuel with combustion oxidant from the combustion oxidant inlet only.

In accordance with the present invention, in the second operation mode of the installation, the combustion oxidant is heated upstream of the combustion oxidant inlet by heat exchange with process water in the oxidant preheater.

The process water used to preheat the combustion oxidant by heat exchange preferably has a temperature between 30°C and 360°C, preferably between 102°C and 300°C.

The combustion unit normally generates electrical power when the installation is in the first operation mode and does not generate electrical power when the installation is in the second operation mode. Nevertheless, the installation can also be operated in the second operation mode while electricity is generated by the combustion unit if the hot exhaust gas from the combustion unit bypasses the HRSG. However, in that case the overall energy efficiency of the installation will be reduced.

In order to use even more of the heat generated by the combustion of fuel in the HRSG in the second operation mode, part of the flue gas evacuated from the HRSG via its flue gas outlet may be recycled to the HRSG by means of a flue gas recycle.

Such a flue gas recycle in addition increases the amount of gas flowing through the HRSG in the second operation mode thereby increasing heat transfer by convection from the gaseous atmosphere in the HRSG to the process water/steam flowing through the water/steam flow path.

The recycled flue gas is preferably admixed to the combustion oxidant upstream of the combustion oxidant inlet of the HRSG. The recycled flue gas is more preferably mixed with the combustion oxidant after it has been preheated in the oxidant preheater (i.e. downstream of the oxidant preheater in the flow direction of the combustion oxidant) so as to maximize the temperature difference between the oxidant and the process water in the oxidant preheater and thus maintain a high heat exchange efficiency in the oxidant preheater.

In the first operation mode, the HRSG may operate with or without supplementary firing.

According to one embodiment whereby supplementary firing takes place in the HRSG in the first operation mode, fuel is introduced into the HRSG via its fuel inlet in the first operation mode and said fuel is combusted in the HRSG by means of the at least one supplementary fire burner with oxygen present in the hot exhaust gas only. In other words, the hot exhaust gas from the combustion unit then not only serves as (i) a direct heat source for the generation of steam from the process water, but also as (ii) an oxygen source for supplementary firing of fuel introduced into the HRSG to generate extra heat for steam generation.

According to an alternative embodiment with supplementary firing in the first operation mode, fuel is introduced into the HRSG via the fuel inlet and combustion oxidant is introduced into the HRSG via its combustion oxidant inlet in the first operation mode and the fuel is combusted in the HRSG in said first operation mode by means of the at least one supplementary fire burner with any oxygen present in the hot exhaust gas and with combustion oxidant introduced via the combustion oxidant inlet.

In the latter case, the combustion oxidant which is introduced into the HRSG in the first operation mode may be heated upstream of the combustion oxidant inlet by heat exchange with process water in the oxidant preheater as described above with respect to the second operation mode. However, as the HRSG is generally designed for optimum energy efficiency in the first operation mode, the combustion oxidant is usually not heated by means of the oxidant preheater in the first operation mode.

If fuel is introduced into the HRSG for supplementary firing during the first operation mode, the rate at which said fuel is introduced into the HRSG during the first operation mode is as a rule lower than the rate at which said fuel is introduced into the HRSG in the second operation mode.

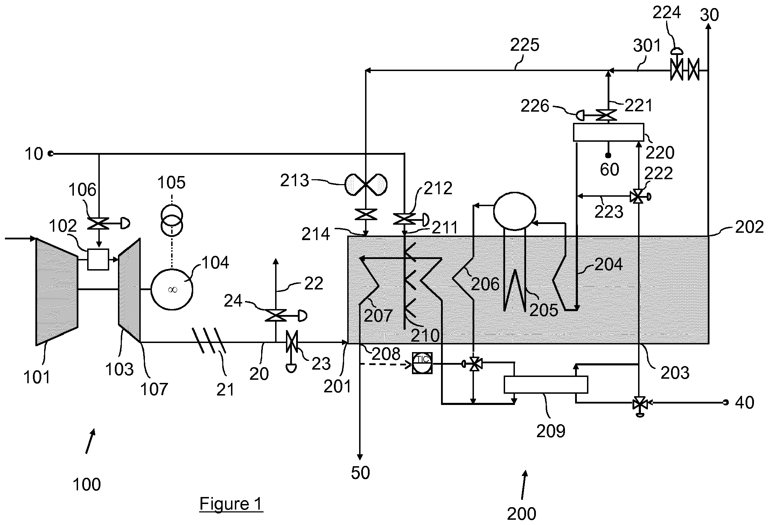

The present invention and its advantages are illustrated in the following example, reference being made to figure 1 which is a schematic representation of an installation according to the invention.

The combined-cycle co-generation installation of figure 1 comprises a combustion unit 100, which consists of a gas turbine, and a HRSG 200.

The gas turbine 100 comprises an air compression section 101, a combustion section 102 and a turbine section 103. A generator 104 transforms the mechanical power generated in the turbine section 103 into electrical energy which can, for example, be supplied to the grid 105. A valve 106 regulates the rate at which fuel 10, such as natural gas, is supplied to the combustion section 102 of the gas turbine 100.

The gas turbine 100 has an exhaust gas outlet 107 which is connected to an exhaust gas inlet 201 of the HRSG 200 by means of exhaust gas duct 20 which is equipped with a silencer 21 for noise control. Exhaust gas from the gas turbine 100 can also be sent directly to the stack 30 by means of by-pass duct 22. When the gas turbine 100 is in operation, the flow of exhaust gas from the gas turbine 100 to the HRSG 200, respectively to the stack 30 is controlled by means of control valves 23, 24, typically in the form of guillotine dampers.

In a first operation mode, the gas turbine 100 operates at nominal load and the hot exhaust gas from the gas turbine 100 is supplied to the HRSG 200 via its exhaust gas inlet 201. The HRSG 200 then operates as a steam recovery heat generator without supplementary fire. At the other end of the HRSG, the flue gas leaves the HRSG 200 via flue gas outlet 202 and is thereafter sent to stack 30

Process water 40 is supplied to the HRSG 200 via its process water inlet 203. From said process water inlet 203, the process water flows along the water/steam flow path through economizer 204 before being introduced into evaporator 205 where the process water is transformed to steam. The steam from evaporator 205 continues along the water/steam flow path via superheaters 206 and 207 before leaving the HRSG at steam outlet 208. Upstream of water inlet 203, the process water 40 can optionally be preheated by heat exchange with the steam in desuperheater 209.

The steam generated by the HRSG 200, which may, for example, be at a temperature of 370°C and at a pressure of 45 barg, can be sent as process steam to end users 50 and/or can in turn be used to generate electricity.

It may, in this respect be pointed out that the process water 40 fed to HRSG 200 may, at least in part, consist of recycled condensed steam 50, having, for example, a temperature of 110°C.

The first operation mode is used when the price of electricity is such that electricity generation by means of combustion unit 100 is profitable, i.e. when the cost of generating electricity by means of combustion unit 100 is less than the price to be paid for electricity from the grid 105.

HRSG 200 is designed for optimum efficiency in the above-described first operation mode when the combustion unit 100 operates at nominal load.

When generation of electricity by means of the combustion unit 100 is not profitable, the installation is operated in a second operation mode. The combustion unit 100 is switched off and the HRSG 200 operates as a conventional boiler.

Thereto HRSG 200 is equipped with a supplementary fire burner 210 which, in the illustrated embodiment, is connected to the same source of natural gas 10 as is the combustion section 102 of the gas turbine 100. The fuel enters HRSG 200 via fuel inlet 211 which is connected to supplementary fire burner 210. The flow of fuel to supplementary fire burner 210 is controlled by control valve 212.

Combustion air 60 is propelled by fan 213 and introduced into HRSG 200 via combustion oxidant inlet 214.

During the second operation mode, the necessary heat for steam generation is produced inside HRSG 200 through the combustion by means of supplementary fire burner 210 of the fuel (natural gas 10) introduced via fuel inlet 211 with the oxidant (air 60) introduced via oxidant inlet 214.

It is a problem with prior art heat recovery steam generators designed for optimum efficiency in the above-described first operation mode when the combustion unit 100 operates at nominal load, that they are significantly less efficient when operating as a conventional boiler, in which case a relatively high proportion of the heat generated in the HRSG is lost via the stack.

The present invention allows to increase the efficiency of a HRSG operating as a conventional boiler by reducing the flue gas heat losses and by increasing the portion of generated heat which is effectively used for steam generation.

Thereto, the HRSG 200 of the installation according to the present invention comprises a combustion oxidant preheater 220 in which the combustion air 60, which is normally ambient air, is heated by heat exchange with the process water 40 at a suitable temperature, before being introduced into HRSG 200 via oxidant inlet 214.

Due to the excess heat in the gaseous atmosphere of HRSG 200 in the zone preceding flue gas outlet 202 when said HRSG 200 operates as a conventional boiler, as is the case in the second operation mode, the use of all or part of the process water 40 to heat the combustion oxidant 60 before it is introduced into HRSG 200 has little or no impact on the steam generating capacity of HRSG 200, but does reduce heat loss via the flue gas evacuated from HRSG 200.

In the illustrated embodiment, process water 40 is recycled as condensed steam and is supplied to HRSG 200 at a temperature of 110°C. In addition, at least part of the process water 40 is preheated by heat exchange in desuperheater 209.

As a consequence, even upstream of economizer 204, the temperature process of the water is sufficient for heating the combustion air 60 from ambient temperature to a temperature of about 80°C, i.e. between 70°C and 90°C in oxidant preheater 220.

In other embodiments, for example when the process water 40 is supplied to HRSG 200 at ambient temperature, the oxidant preheater 220 may be positioned between economizer 204 and evaporator 205, or between a water preheater and evaporator 205, as, for example, described earlier.

The preheated combustion oxidant 221 is then sent to the combustion oxidant inlet 214 of HRSG 200. The amount of combustion oxidant 60 supplied to the HRSG is controlled by control valve 226.

As shown in the illustrated embodiment, not all of the process water 40 need be used for heating the combustion oxidant 60 in oxidant preheater 220.

By means of control valve 222 and by-pass conduit 223, the portion of the process water 40 which is effectively sent to oxidant preheater 220 is controlled, whereas the remainder of the process water 40 by-passes said oxidant preheater 220. By-pass conduit 223 also makes it possible to supply combustion oxidant to the HRSG 200 without any heating of said combustion oxidant in oxidant preheater 220, for example when combustion oxidant is supplied to HRSG 200 for supplementary filing in the first operation mode, when all of the process water by-passes the oxidant preheater 220 via by-pass conduit 223.

In order to further decrease the flue gas heat losses when HRSG 200 operates as a conventional boiler, a portion of the flue gas, which leaves HRSG 200 at a temperature of, for example, 170°C, may be recycled back to HRSG 200.

The amount of flue gas which is recycled to HRSG 200 is controlled by control valve 224.

Preferably, the recycled flue gas is mixed with the combustion oxidant 60 after said combustion oxidant 60 has been heated in oxidant preheater 200. The thus obtained mixture 225 of heated oxidant and recycled flue gas is then introduced into HRSG 200 via combustion oxidant inlet 214.

The present invention thus allows the HRSG 200 to operate at high energy efficiency, close or equivalent to the energy efficiency of a conventional boiler, when no hot exhaust gas from combustion unit 100 is supplied to HRSG 200, for example when combustion unit 100 is switched off.

Indeed, it was found that when no hot exhaust gas from combustion unit 100 is supplied to HRSG 200, the present invention makes it possible to reduce flue gas heat losses of HRSG 200 from 20% to 3%.

In other words, the installation according to the present invention can be operated at high efficiency, both when the combustion unit 100 operates at nominal load to generate electricity and when combustion unit 100 is switched off. The present invention thus makes it possible to adjust the operation of the installation to the instantaneous electricity price while maintaining an energetically highly efficient steam generation in HRSG 200.

As explained above, it is also possible to adjust the present invention to an embodiment whereby, at nominal operation of combustion unit 100, the hot exhaust gas from combustion unit 100 is supplied to HRSG 200, while the latter operates with supplementary firing to generate steam.

## Claims

1. A combined-cycle co-generation installation comprising:
- a combustion unit (100) adapted to generate electrical power, said combustion unit having an exhaust gas outlet (107),
- an HRSG (200) having an exhaust gas inlet (201) connected to the exhaust gas outlet (107) of the combustion unit (100) so as to enable exhaust gas from the combustion unit (100) to be supplied to the HRSG (200) via said exhaust gas inlet (201), said HRSG (100) further comprising:
∘ a flue gas outlet (202),
∘ a process water inlet (203), a steam outlet (208) and a water/steam flow path connecting the process water inlet (203) to the steam outlet (208), said water/steam flow path including an evaporator (205),
∘ a combustion oxidant inlet (214), a fuel inlet (211), at least one supplementary fire burner (210) connected to said fuel inlet (211),
- an oxidant preheater (220) connected to the combustion oxidant inlet (214),
the installation being **characterized in that** said oxidant preheater is adapted for heating combustion oxidant (60) upstream of the combustion oxidant inlet (214) by heat exchange with the process water (40) upstream of the evaporator (205).

2. Installation according to claim 1, whereby the oxidant preheater (220) is situated upstream of the process water inlet (203) of the HRSG (200).

3. Installation according to claim 1:
• whereby the water/steam flow path comprises an economizer (204) upstream of the evaporator (205) and whereby the oxidant preheater (220) is situated between the economizer (204) and the evaporator (205); or
• whereby the water/steam flow path includes a water preheater upstream of the evaporator and whereby the oxidant preheater is situated between the water preheater and the evaporator (205); or
• whereby the water/steam flow path includes an economizer (204) located between a water preheater and the evaporator (205) and whereby the oxidant preheater is situated between the water preheater and the economizer (204).

4. Installation according to any one of the preceding claims, whereby the HRSG (200) further comprises a flue gas recycle (301) adapted to recycle part of the HRSG flue gas evacuated from the HRSG (200) via the flue gas outlet (202) back into the HRSG (200).

5. Installation according to claim 4, whereby the flue gas recycle (301) is adapted to admix at least part and preferably all of the recycled HRSG flue gas with the combustion oxidant (60, 221) upstream of the combustion oxidant inlet (214).

6. Installation according to claim 5, whereby the flue gas recycle (301) is adapted to admix said at least part of the recycled HRSG flue gas with the combustion oxidant (221) downstream of the oxidant preheater (220).

7. Installation according to any one of the preceding claims, whereby the combustion unit (100) is or comprises a gas turbine.

8. Use of a co-generation installation according to any one of the preceding claims to generate steam by means of the HRSG (200) and optionally also electricity by means of the combustion unit (100).

9. Use of a co-generation installation according to any one of claims 1 to 7, whereby:
A. in a first operation mode:
• hot exhaust gas from the combustion unit (100) is introduced into the HRSG (200) via its exhaust gas inlet (201), and
• thermal energy present in the hot exhaust gas is used to generate steam from process water (40) in the HRSG (200);
and whereby:
B. in a second operation mode:
• no exhaust gas from the combustion unit (100) is introduced into the HRSG (200),
• fuel (10) is introduced into the HRSG (200) via its fuel inlet (211),
• combustion oxidant (60) is introduced into the HRSG (200) via its combustion oxidant inlet (214),
• the fuel (10) is combusted with the combustion oxidant (60) in the HRSG (200) by means of the at least one supplementary fire burner (210), and
• thermal energy generated by the fuel combustion is used to generate steam from process water (40) in the HRSG (200),
whereby, in the second operation mode, the combustion oxidant (60) is heated upstream of the combustion oxidant inlet (214) by heat exchange with process water (40) in the oxidant preheater (220).

10. Use according to claim 9, whereby, in the second operation mode, the process water (40) is supplied to the oxidant preheater (220) at a temperature between 30°C and 360°C, preferably between 102°C and 300°C.

11. Use according to claim 9 or 10, whereby electrical power is generated by the combustion unit (100) in the first operation mode and no electrical power is generated by the combustion unit (100) in the second operation mode.

12. Use according to any one of claims 9 to 11 whereby the HRSG (200) comprises a flue gas recycle (301) adapted to recycle part of the HRSG flue gas evacuated from the HRSG (200) via the flue gas outlet (202) back into the HRSG (200), and whereby in the second operation mode,
• part of the flue gas evacuated from the HRSG (200) is recycled to the HRSG (200) via the flue gas recycle (301).

13. Use according to claim 12, whereby in the second operation mode, the recycled flue gas is admixed to the combustion oxidant (60) upstream of the combustion oxidant inlet (214).

14. Use according to claim 13, whereby in the second operation mode the recycled flue gas is admixed to the combustion oxidant (60) downstream of the oxidant preheater (220).

15. Use according to any one of claims 9 to 14 whereby, in the first operation mode:
• fuel (10) is introduced into the HRSG (200) via its fuel inlet (211) and combusted in the HRSG (200) with oxygen present in the hot exhaust gas from the combustion unit (100) by means of the at least one supplementary fire burner (210).

## Patentansprüche

1. Kraft-Wärme-Kopplungsanlage mit kombiniertem Zyklus, umfassend:
- eine Verbrennungseinheit (100), die ausgelegt ist, elektrische Energie zu erzeugen, wobei die Verbrennungseinheit einen Abgasauslass (107) aufweist,
- einen Wärmerückgewinnungs-Dampfgenerator (200), der einen Abgaseinlass (201) aufweist, der mit dem Abgasauslass (107) der Verbrennungseinheit (100) verbunden ist, um so zu ermöglichen, dass Abgas dem Wärmerückgewinnungs-Dampfgenerator (200) von der Verbrennungseinheit (100) über den Abgaseinlass (201) zugeführt wird, wobei der Wärmerückgewinnungs-Dampfgenerator (100) weiter umfasst:
∘ einen Rauchgasauslass (202),
∘ einen Prozesswassereinlass (203), einen Dampfauslass (208) und einen Wasser-/Dampfströmungsweg, der den Prozesswassereinlass (203) mit dem Dampfauslass (208) verbindet, wobei der Wasser-/Dampfströmungsweg einen Verdampfer (205) einschließt,
∘ einen Verbrennungsoxidationsmitteleinlass (214), einen Brennstoffeinlass (211), zumindest einen ergänzenden Brenner (210), der mit dem Brennstoffeinlass (211) verbunden ist,
- einen Oxidationsmittelvorwärmer (220), der mit dem Verbrennungsoxidationsmitteleinlass (214) verbunden ist,
wobei die Anlage **dadurch gekennzeichnet ist, dass** der Oxidationsmittelvorwärmer zum Erwärmen des Verbrennungsoxidationsmittels (60) stromaufwärts des Verbrennungsoxidationsmitteleinlasses (214) durch Wärmeaustausch mit dem Prozesswasser (40) stromaufwärts des Verdampfers (205) ausgelegt ist.

2. Anlage nach Anspruch 1, wobei der Oxidationsmittelvorwärmer (220) stromaufwärts des Prozesswassereinlasses (203) des Wärmerückgewinnungs-Dampfgenerators (200) gelegen ist.

3. Anlage nach Anspruch 1:
• wobei der Wasser-/Dampfströmungsweg einen Economiser (204) stromaufwärts des Verdampfers (205) umfasst und wobei der Oxidationsmittelvorwärmer (220) zwischen dem Economiser (204) und dem Verdampfer (205) gelegen ist; oder
• wobei der Wasser-/Dampfströmungsweg einen Wasservorwärmer stromaufwärts des Verdampfers einschließt und wobei der Oxidationsmittelvorwärmer zwischen dem Wasservorwärmer und dem Verdampfer (205) gelegen ist; oder
• wobei der Wasser-/Dampfströmungsweg einen Economiser (204) einschließt, der zwischen einem Wasservorwärmer und dem Verdampfer (205) gelegen ist, und wobei der Oxidationsmittelvorwärmer zwischen dem Wasservorwärmer und dem Economiser (204) gelegen ist.

4. Anlage nach einem der vorstehenden Ansprüche, wobei der Wärmerückgewinnungs-Dampfgenerator (200) weiter eine Rauchgasrückführung (301) umfasst, die ausgelegt ist, einen Teil des Wärmerückgewinnungs-Dampfgeneratorgases, das aus dem Wärmerückgewinnungs-Dampfgenerator (200) über den Rauchgasauslass (202) evakuiert wird, wieder in den Wärmerückgewinnungs-Dampfgenerator (200) zurückzuführen.

5. Anlage nach Anspruch 4, wobei die Rauchgasrückführung (301) ausgelegt ist, zumindest einen Teil und vorzugsweise die Gesamtheit des rückgeführten Wärmerückgewinnungs-Dampfgenerator-Rauchgases dem Verbrennungsoxidationsmittel (60, 221) stromaufwärts des Verbrennungsoxidationsmitteleinlasses (214) beizumengen.

6. Anlage nach Anspruch 5, wobei die Rauchgasrückführung (301) ausgelegt ist, zumindest einen Teil des rückgeführten Wärmerückgewinnungs-Dampfgenerator-Rauchgases dem Verbrennungsoxidationsmittel (221) stromabwärts des Oxidationsmittelvorwärmers (220) beizumengen.

7. Anlage nach einem der vorstehenden Ansprüche, wobei die Verbrennungseinheit (100) eine Gasturbine ist oder umfasst.

8. Verwendung einer Kraft-Wärme-Kopplungsanlage nach einem der vorstehenden Ansprüche zum Erzeugen von Dampf mittels des Wärmerückgewinnungs-Dampfgenerators (200) und optional auch von Elektrizität mittels der Verbrennungseinheit (100).

9. Verwendung einer Kraft-Wärme-Kopplungsanlage nach einem der Ansprüche 1 bis 7, wobei:
A. in einem ersten Betriebsmodus:
• heißes Abgas aus der Verbrennungseinheit (100) in den Wärmerückgewinnungs-Dampfgenerator (200) über seinen Abgaseinlass (201) eingeleitet wird und
• Wärmeenergie, die im heißen Abgas vorhanden ist, zum Erzeugen von Dampf aus Prozesswasser (40) im Wärmerückgewinnungs-Dampfgenerator (200) verwendet wird;
und wobei:
B. in einem zweiten Betriebsmodus:
• kein Abgas aus der Verbrennungseinheit (100) in den Wärmerückgewinnungs-Dampfgenerator (200) eingeleitet wird,
• Brennstoff (10) in den Wärmerückgewinnungs-Dampfgenerator (200) über seinen Brennstoffeinlass (211) eingeleitet wird,
• Verbrennungsoxidationsmittel (60) in den Wärmerückgewinnungs-Dampfgenerator (200) über seinen Verbrennungsoxidationsmitteleinlass (214) eingeleitet wird,
• der Brennstoff (10) mit dem Verbrennungsoxidationsmittel (60) im Wärmerückgewinnungs-Dampfgenerator (200) mittels des zumindest einen ergänzenden Brenners (210) verbrannt wird und
• Wärmeenergie, die durch die Brennstoffverbrennung erzeugt wird, zum Erzeugen von Dampf aus Prozesswasser (40) im Wärmerückgewinnungs-Dampfgenerator (200) verwendet wird.
wobei im zweiten Betriebsmodus das Verbrennungsoxidationsmittel (60) stromaufwärts des Verbrennungsoxidationsmitteleinlasses (214) durch Wärmeaustausch mit Prozesswasser (40) im Oxidationsmittelvorwärmer (220) erwärmt wird.

10. Verwendung nach Anspruch 9, wobei im zweiten Betriebsmodus das Prozesswasser (40) dem Oxidationsmittelvorwärmer (220) bei einer Temperatur zwischen 30°C und 360°C, vorzugsweise zwischen 102°C und 300°C zugeführt wird.

11. Verwendung nach Anspruch 9 oder 10, wobei im ersten Betriebsmodus elektrischer Strom durch die Verbrennungseinheit (100) erzeugt wird und im zweiten Betriebsmodus kein elektrischer Strom durch die Verbrennungseinheit (100) erzeugt wird.

12. Verwendung nach einem der Ansprüche 9 bis 11, wobei der Wärmerückgewinnungs-Dampfgenerator (200) eine Rauchgasrückführung (301) umfasst, die ausgelegt ist, einen Teil des Wärmerückgewinnungs-Dampfgenerator-Rauchgases, das aus dem Wärmerückgewinnungs-Dampfgenerator (200) über den Rauchgasauslass (202) evakuiert wird, wieder in den Wärmerückgewinnungs-Dampfgenerator (200) zurückzuführen, und wobei im zweiten Betriebsmodus
• ein Teil des Rauchgases, das aus dem Wärmerückgewinnungs-Dampfgenerator (200) evakuiert wird, über die Rauchgasrückführung (301) zum Wärmerückgewinnungs-Dampfgenerator (200) zurückgeführt wird.

13. Verwendung nach Anspruch 12, wobei im zweiten Betriebsmodus das rückgeführte Rauchgas dem Verbrennungsoxidationsmittel (60) stromaufwärts des Verbrennungsoxidationsmitteleinlasses (214) beigemengt wird.

14. Verwendung nach Anspruch 13, wobei im zweiten Betriebsmodus das rückgeführte Rauchgas dem Verbrennungsoxidationsmittel (60) stromabwärts des Oxidationsmittelvorwärmers (220) beigemengt wird.

15. Verwendung nach einem der Ansprüche 9 bis 14, wobei im ersten Betriebsmodus:
• Brennstoff (10) in den Wärmerückgewinnungs-Dampfgenerator (200) über seinen Brennstoffeinlass (211) eingeleitet wird und im Wärmerückgewinnungs-Dampfgenerator (200) mit Sauerstoff, der im heißen Abgas aus der Verbrennungseinheit (100) vorhanden ist, mittels des zumindest einen ergänzenden Brenners (210) verbrannt wird.

## Revendications

1. Installation de coproduction à cycle combiné comprenant :
- une unité de combustion (100) conçue pour produire de la puissance électrique, ladite unité de combustion ayant une sortie de gaz d'échappement (107),
- un HRSG (générateur à vapeur à récupération de chaleur) (200) ayant une entrée de gaz d'échappement (201) reliée à la sortie de gaz d'échappement (107) de l'unité de combustion (100) afin de permettre aux gaz d'échappement provenant de l'unité de combustion (100) d'être fournis au HRSG (200) via ladite entrée de gaz d'échappement (201), ledit HRSG (100) comprenant en outre :
∘ une sortie de gaz brûlés (202),
∘ une entrée d'eau de processus (203), une sortie de vapeur (208) et un chemin de flux d'eau/vapeur reliant l'entrée d'eau de processus (203) à la sortie de vapeur (208), ledit chemin de flux d'eau/vapeur incluant un évaporateur (205),
∘ une entrée d'oxydant de combustion (214), une entrée de carburant (211), au moins un brûleur à flammes supplémentaire (210) relié à ladite entrée de carburant (211),
- un dispositif de préchauffage d'oxydant (220) relié à l'entrée d'oxydant de combustion (214),
l'installation étant **caractérisée en ce que** ledit dispositif de préchauffage d'oxydant est conçu pour chauffer l'oxydant de combustion (60) en amont de l'entrée d'oxydant de combustion (214) par échange de chaleur avec l'eau de processus (40) en amont de l'évaporateur (205).

2. Installation selon la revendication 1, par laquelle le dispositif de préchauffage d'oxydant (220) est placé en amont de l'entrée d'eau de processus (203) du HRSG (200).

3. Installation selon la revendication 1,
• par laquelle le chemin de flux d'eau/vapeur comprend un économiseur (204) en amont de l'évaporateur (205) et par laquelle le dispositif de préchauffage d'oxydant (220) est situé entre l'économiseur (204) et l'évaporateur (205) ; ou
• par laquelle le chemin de flux d'eau/vapeur inclut un dispositif de préchauffage d'eau en amont de l'évaporateur et par laquelle le dispositif de préchauffage d'oxydant est situé entre le dispositif de préchauffage d'eau et l'évaporateur (205) ; ou
• par laquelle le chemin de flux d'eau/vapeur inclut un économiseur (204) situé entre un dispositif de préchauffage d'eau et l'évaporateur (205) et par laquelle le dispositif de préchauffage d'oxydant est situé entre le dispositif de préchauffage d'eau et l'économiseur (204).

4. Installation selon l'une quelconque des revendications précédentes, par laquelle le HRSG (200) comprend en outre un recyclage des gaz brûlés (301) conçu pour recycler une partie des gaz brûlés du HRSG évacués du HRSG (200) via la sortie de gaz brûlés (202) en retour dans le HRSG (200).

5. Installation selon la revendication 4, par laquelle le recyclage des gaz brûlés (301) est conçu pour mélanger au moins une partie et de préférence la totalité des gaz brûlés du HRSG recyclés avec l'oxydant de combustion (60, 221) en amont de l'entrée d'oxydant de combustion (214).

6. Installation selon la revendication 5, par laquelle le recyclage des gaz brûlés (301) est conçu pour mélanger ladite au moins une partie des gaz brûlés du HRSG recyclés avec l'oxydant de combustion (221) en aval du dispositif de préchauffage d'oxydant (220).

7. Installation selon l'une quelconque des revendications précédentes, par laquelle l'unité de combustion (100) est ou comprend une turbine à gaz.

8. Utilisation d'une installation de coproduction selon l'une quelconque des revendications précédentes pour produire de la vapeur au moyen du HRSG (200) et de manière facultative également de l'électricité au moyen de l'unité de combustion (100).

9. Utilisation d'une installation de coproduction selon l'une quelconque des revendications 1 à 7, par laquelle :
A. dans un premier mode de fonctionnement :
• les gaz d'échappement chauds provenant de l'unité de combustion (100) sont introduits dans le HRSG (200) via son entrée de gaz d'échappement (201), et
• l'énergie thermique présente dans les gaz d'échappement chauds est utilisée pour produire de la vapeur à partir de l'eau de processus (40) dans le HRSG (200) ;
et par laquelle :
B. dans un second mode de fonctionnement :
• aucun gaz d'échappement provenant de l'unité de combustion (100) n'est introduit dans le HRSG (200),
• du carburant (10) est introduit dans le HRSG (200) via son entrée de carburant (211),
• l'oxydant de combustion (60) est introduit dans le HRSG (200) via son entrée d'oxydant de combustion (214),
• le carburant (10) est enflammé avec l'oxydant de combustion (60) dans le HRSG (200) au moyen d'au moins un brûleur à flammes supplémentaire (210), et
• l'énergie thermique produite par la combustion de carburant est utilisée pour produire de la vapeur à partir de l'eau de processus (40) dans le HRSG (200),
par laquelle, dans le second mode de fonctionnement, l'oxydant de combustion (60) est chauffé en amont de l'entrée d'oxydant de combustion (214) par échange de chaleur avec l'eau de processus (40) dans le dispositif de préchauffage d'oxydant (220).

10. Utilisation selon la revendication 9, par laquelle, dans le second mode de fonctionnement, l'eau de processus (40) est fournie au dispositif de préchauffage d'oxydant (220) à une température entre 30 °C et 360 °C, de préférence entre 102 °C et 300 °C.

11. Utilisation selon la revendication 9 ou 10, par laquelle de la puissance électrique est produite par l'unité de combustion (100) dans le premier mode de fonctionnement et aucune puissance électrique n'est produite par l'unité de combustion (100) dans le second mode de fonctionnement.

12. Utilisation selon l'une quelconque des revendications 9 à 11, par laquelle le HRSG (200) comprend un recyclage des gaz brûlés (301) conçu pour recycler une partie des gaz brûlés du HRSG évacués du HRSG (200) via la sortie de gaz brûlés (202) en retour dans le HRSG (200), et par laquelle dans le second mode de fonctionnement,
• une partie des gaz brûlés évacués du HRSG (200) est recyclée dans le HRSG (200) via le recyclage des gaz brûlés (301).

13. Utilisation selon la revendication 12, par laquelle dans le second mode de fonctionnement, les gaz brûlés recyclés sont mélangés à l'oxydant de combustion (60) en amont de l'entrée d'oxydant de combustion (214).

14. Utilisation selon la revendication 13, par laquelle dans le second mode de fonctionnement, les gaz brûlés recyclés sont mélangés à l'oxydant de combustion (60) en aval du dispositif de préchauffage d'oxydant (220).

15. Utilisation selon l'une quelconque des revendications 9 à 14, par laquelle, dans le premier mode de fonctionnement :
• du carburant (10) est introduit dans le HRSG (200) via son entrée de carburant (211) et enflammé dans le HRSG (200) avec l'oxygène présent dans les gaz d'échappement chauds provenant de l'unité de combustion (100) au moyen de l'au moins un brûleur à flammes supplémentaire (210).
